Europäisches Patentamt

**European Patent Office**

Office européen des brevets

(11) Publication number: **0 279 495**
A1

## (12) EUROPEAN PATENT APPLICATION

(21) Application number: 88200271.0

(51) Int. Cl.⁴: **B01D 53/26**

(22) Date of filing: 15.02.88

(30) Priority: 16.02.87 NL 8700377

(43) Date of publication of application:
24.08.88 Bulletin 88/34

(84) Designated Contracting States:
AT BE CH DE ES FR GB GR IT LI LU NL SE

(71) Applicant: DELAIR B.V.
Oude Kerkstraat 2
NI-4870 AN Etten-Leur(NL)

(72) Inventor: Cazemier, Pieter Gerard
Beatrixpark 8
NL-4872 BJ Etten-Leur(NL)

(74) Representative: Mommaerts, Johan Hendrik,
Dipl.-Phys.
Octrooibureau Lux Willem Witsenplein 4
NL-2596 BK Den Haag(NL)

(54) **An air drying apparatus.**

(57) An air drying apparatus, comprising a closed housing (1) with an air transfer space (4,5) defined therein, adapted for leading an air flow to be dried therethrough in a substantially vertical direction, and a disc shaped drying agent box (8) which is horizontally arranged in said space and divides said space into two separate chambers, said box (8) being adapted to be at least partially filled with a bed of a granular drying agent, which box (8) is fixedly arranged and is divided by means of radially directed partitions (10) into a plurality of compartments (11), said compartments (11) communicating, at the upper and lower sides of said box, with corresponding ports (13,13′) in a wall (12) of said box (8), and means for shielding a portion of the drying agent being formed by a rotatable sliding valve assembly consisting of a hollow shaft (14) which is rotatably supported in the centre of the air transfer space (4,5), and is connected with a driving means, said shaft (14) being provided with a transverse median partition (10), and, moreover, is connected at its extremities with a supply and discharge (19,20) respectively for the regeneration air, and further consisting of two caps (23) at both sides of said transverse partition communicating with said hollow shaft, said caps (23) being adapted to close in a substantial air-tight manner one or more ports (13,13′) in the wall (12) of the drying agent box (8).

FIG. 1.

## An air drying apparatus.

The invention relates to an air drying apparatus, comprising a closed housing with an air transfer space defined therein, adapted for leading an air flow to be dried therethrough in a substantially vertical direction, and a disc shaped drying agent box which is horizontally arranged in said space and divides said space into two separate chambers, said box being adapted to be at least partially filled with a bed of a granular drying agent, a part of the walls defining said box being provided with air transfer apertures so as to allow the air led through said transfer space to flow through said drying agent, means being provided for shielding a portion of said drying agent in respect of said air flow and for including said portion into a second heated regeneration air flow, said means being adapted for continuously changing the shielded portion and, thus regenerating said drying agent anywhere at intervals.

The current air dryers of this kind comprise a rotatable drying agent box. This means that seals are to be provided between said box and the adjacent walls of the transfer space and the fixed partitions defining the passage for said additional air flow, in order to prevent leak flows. When using a granular drying agent, it is to be included in a horizontal box, since, otherwise, a uniform distribution over the air flow cannot be obtained.

The advantage of drying apparatus of the abovementioned kind is their simple structure, so that they can work during a long time without much maintenance. However the seals, in particular those between the drying agent box and the surrounding walls, must be very good since, otherwise, a leak flow of not-dried air might be formed, and, moreover, mixing of air from the main flow and from the additional flow will take place in said box and near the connection between the partitions and the box, which would somewhat impair the operation of the apparatus.

It is an object of the invention to provide a drying apparatus of the above-mentioned kind which does not have these draw-backs, and which is characterised in that the drying agent box is fixedly arranged, and is divided by means of radially directed partitions into a plurality of compartments, said compartments communicating, at the upper and lower sides of said box, with corresponding ports in a wall of said box, and in that the means for shielding a portion of the drying agent are formed by a rotatable sliding valve assembly consisting of a hollow shaft which is rotatably supported in the centre of the air transfer space, and is connected with a driving means, said shaft being provided with a transverse median partition, and, moreover, is connected at its extremities with a supply and discharge respectively for the regeneration air, and further consisting of two caps at both sides of said transverse partition communicating with said hollow shaft, said caps being adapted to close in a substantial air-tight manner one or more ports in the wall of the drying agent box.

Since the drying agent box is now stationary, an importance cause for leakage has been removed, so that it can be avoided that not-dried air will leave the apparatus. Moreover only a relatively small mass is to be rotated.

In order to suppress the leak flow still further, preferably the caps are provided, laterally of their inner spaces, with additional shielding surfaces, by means of which a port can be closed without connecting it with the hollow shaft.

In a practical embodiment of this apparatus, the drying agent box is provided with a cylindrical wall coaxially surrounding, in its central part, said hollow shaft, said ports being situated in said wall, and said caps forming part of a cylindrical sliding valve rotatable inside said cylindrical box wall and communicating with said hollow shaft, said valve having wall portions defining said caps and windows formed in said wall, the latter being adapted to cover one or more ports in the box wall, the other ports remaining freely in communication with the adjacent transfer chambers. Said windows are, in particular, surrounded by sealing rims contacting the cylinder wall of the drying agent box.

Said ports in said cylinder wall can, in particular, extend in the axial direction beyond said cylindrical sliding valve, said valve being provided, in the vicinity of said windows, with upwardly or downwardly extended wall portions respectively, by means of which said port portions can be shielded.

Finally it is also possible to provide said ports in the upper or lower wall respectively of the drying agent box, said caps then being movable over the upper or lower surface respectively.

The invention will be elucidated below in more detail by reference to a drawing, showing in:

Fig. 1 a diagrammatic cross-section of a first embodiment of the apparatus according to the invention;

Figs. 2a and b cross-sections according to lines IIA-IIA and IIB - IIB respectively of Fig. 1;

Figs. 3 and 4 modified embodiments of the apparatus of Fig. 1; and

Fig. 5 still another embodiment of the apparatus of the invention.

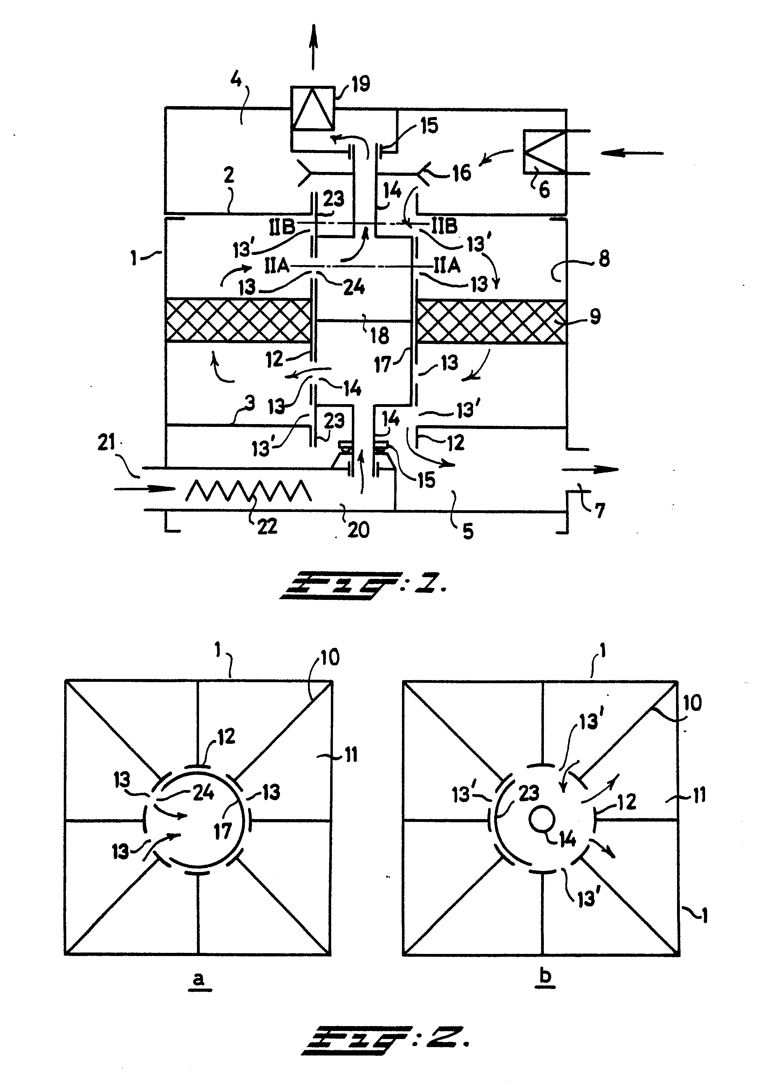

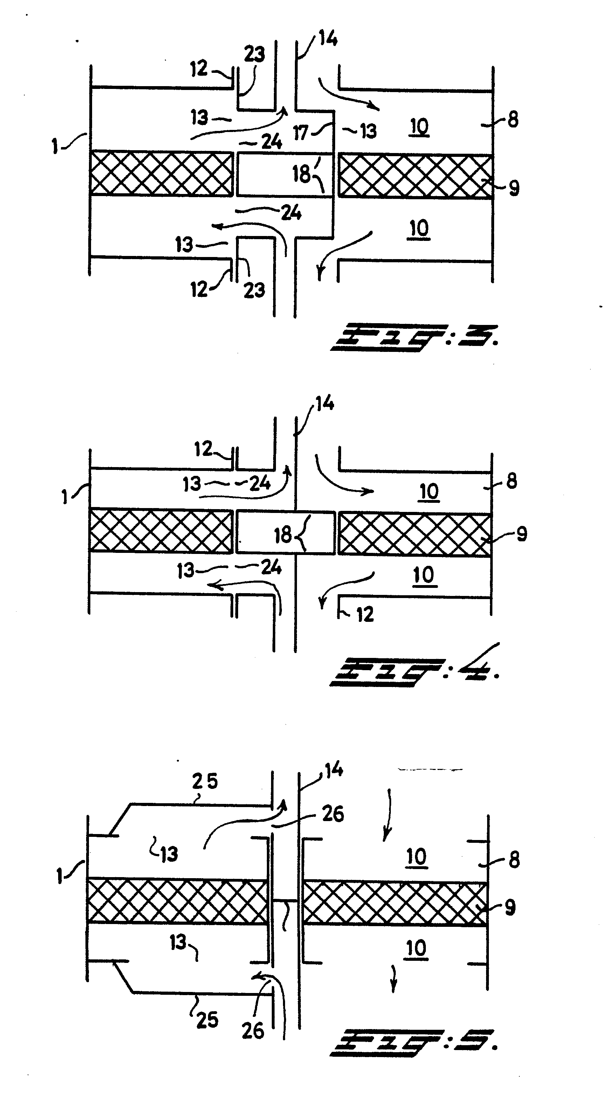

In Figs. 1 and 2 an apparatus according to the invention is represented in a highly simplified diagrammatical fashion, in which, for the sake of simplicity, aspect lines of openings have been left out for clearly showing the flow passages.

This apparatus comprises an outer casing 1, inside which, by means of horizontal transverse walls 2 and 3, an air supply chamber 4 and an air discharge chamber 5 respectively are defined. A blowing fan 6 opens into the supply chamber 4, by means of which the air to be dried is blown into said chamber 4 under a certain overpressure, and the chamber 5 has a discharge opening 7 communicating with a discharge duct for the dried air.

Said walls 2 and 3 define, moreover, a drying agent box 8, within which a drying agent bed 9 is supported, said bed being, for instance, defined by means of a wire grid or perforated plates, and consisting of a granular drying agent. The inner space of the drying agent box 8 is, at both sides of the bed 9, divided by means of radially directed partitions into compartments 11 as shown in Fig. 2. In the central part the box 8 is defined by a cylinder 12 connected with the walls 2 and 3, which cylinder 12 extends over the full height of the box 8.

In the cylinder 12 ports 13 and 13' are formed above and below the bed 9, each port communicating with an associated compartment 11, the ports 13 being situated near the bed 9, and the ports 13' being situated in the vicinity of the walls 2 and 3 resp. A hollow shaft 14 is supported in bearings 15, and extends in the axial direction of the cylinder 12. On this hollow shaft a pulley 16 is fixed which by means of a string is coupled with a driving motor for rotating said shaft.

Inside the cylinder 12 the shaft 14 is widened to form a cylindrical slide valve body 17 which is rotatable, with some play, in the cylinder 12, and in the middle thereof a transverse partition 18 is provided for separating the upper portion of said shaft from the lower portion. The upper end of the shaft 14 communicates with a suction blower 19, and the lower end of said shaft 14 is connected with a chamber 20 opening at 21 in the surroundings, and in said chamber a heating element 22 is arranged.

The cylindrical part 17 of the shaft 14 is at its upper and lower side provided with an extended wall portion 23, by means of which, as will be elucidated below, one or more ports 13' of the cylinder wall 12 can be covered. Furthermore in the wall of the body 17, and below and above the extended wall portions 23, windows 24 are provided, which can cover a number of ports 13.

The operation of this apparatus is as follows. The air to be dried blown in under pressure at 6 flows from the chamber 4 through a number of ports 13' into the upper part of the cylinder 12 which are not covered by the wall portions 23 of the slide valve body 17, which air passes through the bed 9, and flows beyond said bed through the corresponding port 13' towards the chamber 5, and subsequently towards the discharge opening 7. The air sucked in by the blower 19 flows along the heating element 22, through the hollow shaft 14, thereafter through the lower window 24 and the ports 13 behind said window into the corresponding compartments 11, subsequently through the bed 9, and finally through the corresponding ports 13 and the upper window 24 through the upper part of the hollow shaft 14 towards the blower 19. This hot air regenerates the drying agent in the compartments in question of the drying agent box 8.

As appears from Fig. 2a, the window 24 always liberates two ports 13, whereas (Fig. 2b) the wall portion 23 prevents that the air from the chambers 4 and 5 having a higher pressure will flow into the corresponding compartments to be regenerated. The circumferential length of the wall portions 23 is slightly larger than that of the windows 24, and covers three ports 13'. The effect thereof will be, that the air flow to be dried will not immediately flow with the full intensity through the just regenerated bed, and, on the other hand, the air flow to be dried will be gradually reduced before the compartment in question is brought into the regeneration flow, so that a gradual pressure adaptation will take place.

The wall of the body 17 is, near the ports 13 and the extended wall portions 23, provided with suitable sealing rims preventing air from leaking away, and also circumferential sealing rims can prevent short-circuiting flows between the chambers 4 and 5, and provide for centring the body 17 inside the cilinder wall 12.

The rotational speed of the shaft 14 is chosen in such a manner that the various portions of the bed will be regenerated in time.

Fig. 3 shows a simplified embodiment of the apparatus of Fig. 1, in which only the box 8 and the hollow shaft 14 are shown. The ports 13 and 13' are now combined into a single port 13, and the cylindrical wall 12 is only present near the bed 9 and at the extremities of the box 8.

Fig. 4 shows another simplified embodiment in which the passage for the air flow to be dried is widened still further.

Fig. 5 shows a representation of a slightly modified embodiment in which the ports 13 are now formed in the transverse walls 2 and 3, and, instead of a coaxial slide valve 17, caps 25 are used, and the inner space thereof can cover a number of ports 13 and communicates, on the other hand, by means of a passage 26 with the hollow shaft 14, which hollow shaft is no longer widened but is closed, in the middle part, by a partition 18. The operation of this embodiment is the same as that of the preceding ones.

The sealing between the caps 25 and the walls 2 and 3 will often not as good as that of the other embodiments, since the surfaces of said plates can be covered with drying agent particles, which can give rise to wear of the sealing surfaces.

The partitions 10 can be formed as continuous partitions, so that, then, also the drying agent bed 9 is divided into compartments. This can be favourable for counteracting lateral leak of flows.

## Claims

1. An air drying apparatus, comprising a closed housing with an air transfer space defined therein, adapted for leading an air flow to be dried therethrough in a substantially vertical direction, and a disc shaped drying agent box which is horizontally arranged in said space and divides said space into two separate chambers, said box being adapted to be at least partially filled with a bed of a granular drying agent, a part of the walls defining said box being provided with air transfer apertures so as to allow the air led through said transfer space to flow through said drying agent, means being provided for shielding a portion of said drying agent in respect of said air flow and for including said portion into a second heated regeneration air flow, said means being adapted for continuously changing the shielded portion and, thus regenerating said drying agent anywhere at intervals, characterised in that the drying agent box (8) is fixedly arranged, and is divided by means of radially directed partitions (10) into a plurality of compartments (11), said compartments (11) communicating, at the upper and lower sides of said box, with corresponding ports (13, 13') in a wall (12) of said box (8), and in that the means for shielding a portion of the drying agent are formed by a rotatable sliding valve assembly consisting of a hollow shaft (14) which is rotatably supported in the centre of the air transfer space (4, 5), and is connected with a driving means, said shaft (14) being provided with a transverse median partition (10), and, moreover, is connected at its extremities with a supply and discharge (19, 20) respectively for the regeneration air, and further consisting of two caps (23) at both sides of said transverse partition communicating with said hollow shaft, said caps (23) being adapted to close in a substantial air-tight manner one or more ports (13, 13') in the wall (12) of the drying agent box (8).

2. The apparatus of claim 1, characterised in that preferably the caps (23) are provided, laterally of their inner spaces, with additional shielding surfaces, by means of which a port can be closed without connecting it with the hollow shaft.

3. The apparatus of claim 1 or 2, characterised in that the drying agent box (8) is provided with a cylindrical wall (12) coaxially surrounding, in its central part, said hollow shaft (14), said ports (13, 13') being situated in said wall, and said caps forming part of a cylindrical sliding valve (17) rotatable inside said cylindrical box wall and communicating with said hollow shaft, said valve having wall portions (23) defining said caps and windows (24) formed in said wall, the latter being adapted to cover one or more ports (13) in the box wall, the other ports (13') remaining freely in communication with the adjacent transfer chambers (4, 5).

4. The apparatus of claim 3, characterised in that said windows (24) are, in particular, surrounded by sealing rims contacting the cylinder wall (12) of the drying agent box (8).

5. The apparatus of claim 4, characterised in that the ports (13, 13') in said cylinder wall (12) can, in particular, extend in the axial direction beyond said cylindrical sliding valve (17), said valve (17) being provided, in the vicinity of said windows (24), with upwardly or downwardly extended wall portions (23) respectively, by means of which said port portions (13, 13') can be shielded.

6. The apparatus of any one of claims 1..5, characterised in that the ports (13) are provided in the upper or lower wall respectively of the drying agent box (8), said caps (25) then being movable over the upper or lower surface respectively.

FIG: 1.

a

b

FIG: 2.

FIG. 3.

FIG. 4.

FIG. 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 269 611 (E.L. ANDERBERG) * Abstract; figures 1,2,4,5; column 6, line 29 - column 8, line 65 * | 1 | B 01 D 53/26 |
| Y | GB-A- 942 261 (METALLGESELLSCHAFT AG) * Page 1, lines 10-15; page 3, line 38 - page 5, line 81; figures 1-7 * | 1 | |
| A | US-A-4 589 892 (D.M. LEONARD) * Abstract; figures 1,3c,4,5c,5d; column 5, lines 37-68; column 7, line 53 - column 8, line 30; column 8, lines 46-68; column 9, lines 23-60 * | 1 | |

TECHNICAL FIELDS SEARCHED (Int. Cl.4)

B 01 D

The present search report has been drawn up for all claims

| Place of search | Date of completion of the search | Examiner |
|---|---|---|
| THE HAGUE | 25-03-1988 | VAN IDDEKINGE R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

             

& : member of the same patent family, corresponding document

EPO FORM 1503 03.82 (P0401)